# EUROPEAN PATENT SPECIFICATION

(11) **EP 3 288 692 B1**
(45) Date of publication and mention of the grant of the patent: **29.12.2021**
(21) Application number: 16785978.4
(22) Date of filing: 29.04.2016
(51) Int. Cl.: B08B 15/00, A47L 9/12

(54) **A DUST COLLECTION APPARATUS AND A METHOD OF PRODUCING A DUST COLLECTION APPARATUS**
STAUBSAMMELVORRICHTUNG UND VERFAHREN ZUR HERSTELLUNG EINER STAUBSAMMELVORRICHTUNG
APPAREIL DE COLLECTE DE POUSSIÈRE ET PROCÉDÉ DE PRODUCTION D'UN APPAREIL DE COLLECTE DE POUSSIÈRE

(30) Priority: 30.04.2015 HK 15104189
(43) Date of publication of application: 07.03.2018
(73) Proprietor: Techtronic Cordless GP, Anderson, SC 29621 (US)
(72) Inventor: CHEUNG, Chun Kit, New Territories Hong Kong (CN); CHUNN, Daniel Alex, New Territories Hong Kong (CN)
(74) Representative: Novagraaf Group
(86) International application number: PCT/CN2016/080708
(87) International publication number: WO 2016/173550

(56) References cited:
- EP-A1- 0 558 253
- EP-A1- 0 558 253
- CN-U- 201 659 554
- DE-A1- 19 831 383
- US-A- 4 967 516
- US-A- 4 967 516
- US-B1- 6 514 131
- US-B1- 6 514 131

## Description

### TECHNICAL FIELD

The present invention relates to a dust collection apparatus and a method of producing a dust collection apparatus, and particularly, although not exclusively, to a dust collection apparatus having a foam and/or a elastomer frame body.

### BACKGROUND

During an operation such as sanding or cutting of a workpiece, a large amount of debris and dust is usually generated which makes the workshop or the site become dirty. Fines dusts may be easily brought up in the air which may affect the health of the workers, whilst larger pieces of debris may contains sharp edges and/or corners and are dangers to the workers if the debris is left unattended.

A vacuum cleaning device may be arranged to collect the debris or dust generated during the operation of the power tool so that these dust or debris may be immediately collected without spreading around the workshop. Yet, this will require extra consumption of energy and may not be efficient as the suction port may only be fixed to a position approximate to the workpiece. A certain amount of debris and dust will still require extra effort to be cleaned up.

According to its abstract, EP-A-0558253 describes a dust collection bag for a power tool comprises a box-like container which is separable into two parts along a plane of the box-like container and the interfitting portions of the two parts are rigid. One part which is suitably a rigid plastics moulding has means for connecting the container to the power tool outlet and the other part has at least part of its wall surface formed of filter material. The parts may be hinged together and have connection means for releasably connecting them to close the container.

According to its abstract, US-A-4967516 describes a surface treating tool which is provided with a debris collection container which includes a semi-rigid frame defining at least one window and mesh fabric covering that window. The exterior configuration of the container is such that the container blends in which the contour of the tool to provide an aesthetically pleasing appearance.

According to its abstract, US-B-6514131 describes a power tool having a dust suction device integrated into its housing and having an ejection fitting which is connected to the dust suction device and can be detachably fastened with its injection fitting to a dustproof dust box is particularly suitable for containing sanding dust because of a number of side walls of the dust box have air openings and on the inside, support at least one filter element, in particular a folded filter, which overlaps the air openings.

### SUMMARY OF THE INVENTION

In accordance with a first aspect of the present invention, there is provided a dust collection apparatus comprising a frame body defining an air inlet and an exhaust outlet; and a dust blocking component attached the frame body at the exhaust outlet; wherein the dust blocking component is arranged to allow an airflow passing through, and the combination of the frame body and the dust blocking component defines a dust collection cavity therein; and wherein the frame body comprises an at least partially flexible and/or elastic material.

In an embodiment of the first aspect, the frame body comprises a first frame portion arranged to couple with a second frame portion.

In an embodiment of the first aspect, the first frame portion is integrally formed with the second frame portion such that the first frame portion is at least partially connected with the second frame portion.

In an embodiment of the first aspect, further comprising an air inlet port connected to the air inlet of the frame body.

In an embodiment of the first aspect, the air inlet port is integrally formed with the frame body.

In an embodiment of the first aspect, the frame body comprises a foam material and/or an elastomer material.

In an embodiment of the first aspect, the frame body comprises a plurality of layers of material.

In an embodiment of the first aspect, the plurality of layers of material are laminated to form a unitary layer of material.

In an embodiment of the first aspect, the dust blocking component comprises a mesh structure arrange to block dust from passing through.

In an embodiment of the first aspect, the dust blocking component comprises a fabric filter and/or a HEPA filter.

In an embodiment of the first aspect, the dust collection apparatus is arrange to collect dust by separating dust when the airflow containing the dust passes through the dust collection cavity and the dust blocking component such that the dust blocked by the dust blocking component is collected in the dust collection cavity.

In an embodiment of the first aspect, the dust collection apparatus is a dust box for use in a power tool.

In accordance with a second aspect of the present invention, there is provided a method of producing a dust collection apparatus, comprising the steps of: providing a frame body having an air inlet and an exhaust outlet; and attaching a dust blocking component to the frame body at the exhaust outlet; wherein the dust blocking component is arranged to allow an airflow passing through; wherein the combination of the frame body and the dust blocking component defines a dust collection cavity therein; and wherein the frame body comprises an at least partially flexible and/or elastic material.

In an embodiment of the second aspect, the step of providing the frame body comprising the step of molding the at least partially flexible and/or elastic material to form the frame body.

In an embodiment of the second aspect, the frame body is formed by injection molding.

In an embodiment of the second aspect, the frame body is formed by heat forming from a sheet of the at least partially flexible and/or elastic material.

In an embodiment of the second aspect, the frame body comprises a first frame portion arranged to couple with a second frame portion by at least one of gluing, welding, heating and sewing.

In an embodiment of the second aspect, the first frame portion is integrally formed with the second frame portion such that the first frame portion is at least partially connected with the second frame portion.

In an embodiment of the second aspect, further comprising the step of connecting an air inlet port to the air inlet of the frame body.

In an embodiment of the second aspect, an air inlet port is integrally formed with the frame body.

In an embodiment of the second aspect, the frame body comprises a foam material and/or an elastomer material.

In an embodiment of the second aspect, the frame body comprises a plurality of layers of material.

In an embodiment of the second aspect, further comprising the step of laminating the plurality of layers of material to form a unitary layer of material.

In an embodiment of the second aspect, the dust blocking component comprises a mesh structure arrange to block dust from passing through.

In an embodiment of the second aspect, the dust blocking component comprises a fabric filter and/or a HEPA filter.

In an embodiment of the second aspect, the frame body and the dust blocking component are attached by at least one of gluing, welding, heating and sewing.

### BRIEF DESCRIPTION OF THE DRAWINGS

Embodiments of the present invention will now be described, by way of example, with reference to the accompanying drawings in which:
Figure 1 is a perspective view of a dust collection apparatus in accordance with one embodiment of the present invention;
Figure 2 is an illustration of an air flow passing through into and out of a dust collection cavity of the dust collection apparatus of Figure 1;
Figure 3 is an exploded view of the dust collection apparatus of Figure 1;
Figure 4A is an exploded view of the dust collection apparatus of Figure 1 wherein the dust blocking component includes a single layer;
Figure 4B is an exploded view of the dust collection apparatus of Figure 1 wherein the dust blocking component includes multiple layers;
Figure 5 is an exploded view of a dust collection apparatus in accordance with one embodiment of the present invention;
Figure 6A is a perspective view of a dust collection apparatus in accordance with one embodiment of the present invention;
Figure 6B is a perspective view of a dust collection apparatus in accordance with one embodiment of the present invention;
Figure 6C is a perspective view of a dust collection apparatus in accordance with one embodiment of the present invention;
Figure 6D is a perspective view of a dust collection apparatus in accordance with one embodiment of the present invention;
Figure 6E is a perspective view of a dust collection apparatus in accordance with one embodiment of the present invention;
Figure 6F is a perspective view of a dust collection apparatus in accordance with one embodiment of the present invention;
Figure 6G is a perspective view of a dust collection apparatus in accordance with one embodiment of the present invention;
Figure 6H is a perspective view of a dust collection apparatus in accordance with one embodiment of the present invention;
Figure 6I is a perspective view of a dust collection apparatus in accordance with one embodiment of the present invention;
Figure 7A is a perspective view of a dust collection apparatus in accordance with one embodiment of the present invention;
Figure 7B is an exploded view of a dust collection apparatus of Figure 7A;
Figure 8A is a perspective view of a dust collection apparatus in accordance with one embodiment of the present invention;
Figure 8B is an exploded view of a dust collection apparatus of Figure 8A;
Figure 9A is a perspective view of a dust collection apparatus in accordance with one embodiment of the present invention;
Figure 9B is an exploded view of a dust collection apparatus of Figure 9A;
Figure 10A is a perspective view of a dust collection apparatus in accordance with one embodiment of the present invention; and
Figure 10B is an exploded view of a dust collection apparatus of Figure 10A.

### DETAILED DESCRIPTION OF THE PREFERRED EMBODIMENT

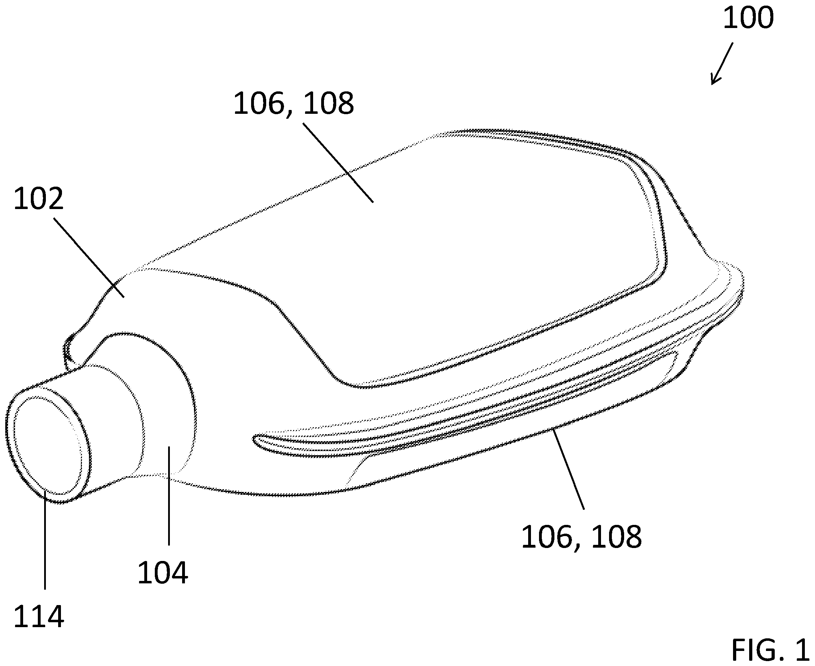

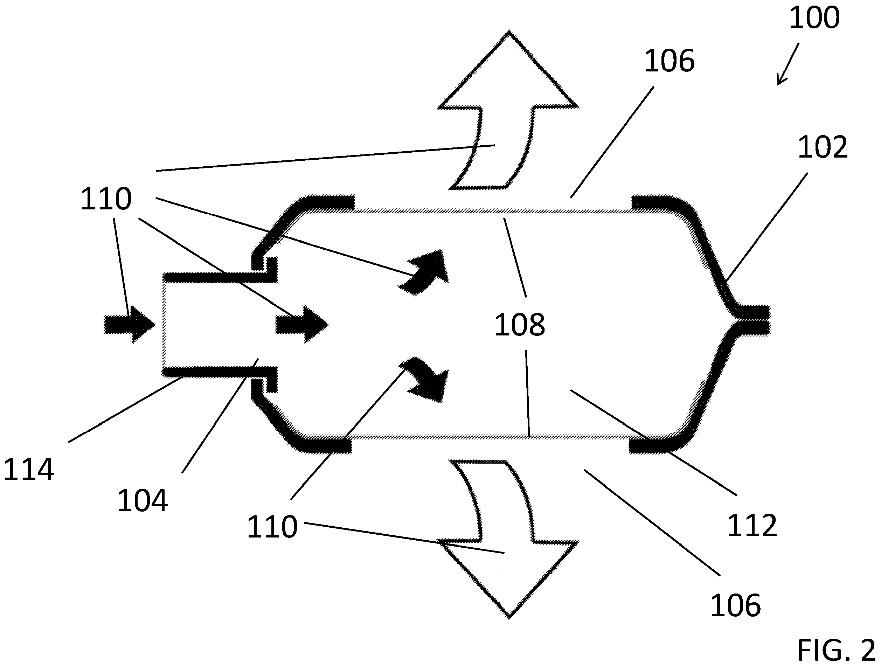

With reference to Figure 1 and 2, there is provided a dust collection apparatus 100 comprising a frame body 102 defining an air inlet 104 and an exhaust outlet 106; and a dust blocking component 108 attached the frame body 102 at the exhaust outlet 106; wherein the dust blocking component 108 is arranged to allow an airflow 110 passing through, and the combination of the frame body 102 and the dust blocking component 108 defines a dust collection cavity 112 therein; and wherein the frame body 102 comprises an at least partially flexible and/or elastic material.

In this embodiment, the dust collection apparatus 100 may be used as a dust box for collecting dust or debris generated by a power tool (not shown), such as but not limited to a (pad) sander, an electric saw, a power drill, etc. The power tool generally includes a motor which generates exhaust during operation. The exhaust may be used for cooling the components housed within the casing of the power tool and/or redirecting the debris or dusts generated by the power tool during operation. The dust collection apparatus 100 may be positioned in a suitable position with the power tool such that the exhaust will pass through the dust box and hence debris and/or dusts carried by these exhaust may be collected by the dust box. In some other embodiments, the dust collection apparatus 100 may be used in a vacuum cleaner for collecting dust collected in a generated airflow.

Referring to Figure 1 and 2, the dust collection apparatus 100 comprises a frame body 102. Preferably, the frame body 102 defines an air inlet 104 and at least one exhaust outlet 106, such as two exhaust outlet 106 as shown in the Figures. Alternatively, any other numbers of air inlets 104 and/or exhaust outlets 106 may be provided on the frame body 102.

Preferably, a dust blocking component 108 is attached to the frame body 102 at the exhaust outlet 106 such that dusts and/or debris are prevented from passing through the exhaust outlet 106 hence entering the outside environment, while the dust blocking component 108 allows an airflow 110 to pass through, hence separating dust when the airflow 110 containing the dust passes through the dust collection cavity 112 and then the dust blocking component 108. In this configuration, the combination of the frame body 102 and the dust blocking component 108 defines a dust collection cavity 112 therein, such that dusts blocked by the dust blocking component 108 may be trapped and collected in the dust collection cavity 112 substantially enclosed by the frame body 102 and the dust blocking component 108.

The dust blocking component 108 may comprise a mesh structure, such as a plastic or foam mesh with multiple apertures, arranged to block larger pieces of debris or dust from passing through. Alternatively, the dust blocking component 108 may comprises a filter such as a fabric filer and/or a HEPA filter for blocking dust or debris with smaller sizes from passing through and escaping to the outside environment.

The frame body 102 is arranged to fix the dust blocking component 108 at the exhaust outlet 106, as well as to provide mechanical strength to the entire structure of the dust collection apparatus 100. Preferably, the frame body 102 comprises an at least partially flexible and/or elastic material. For example, the material may comprise a foam material and/or an elastomer material. Alternatively, the material may be selected from a wide range of moldable synthetic material such as thermoplastic polyurethane (TPU), polyurethane (PU) or ethylene-vinyl acetate (EVA), or any other suitable synthetic material known by a person skilled in the art. The material may not necessary be in a foam form, and the density of the material may be optimized for such as manufacturing cost and processes, weight, strength, elasticity etc. of the frame body 102.

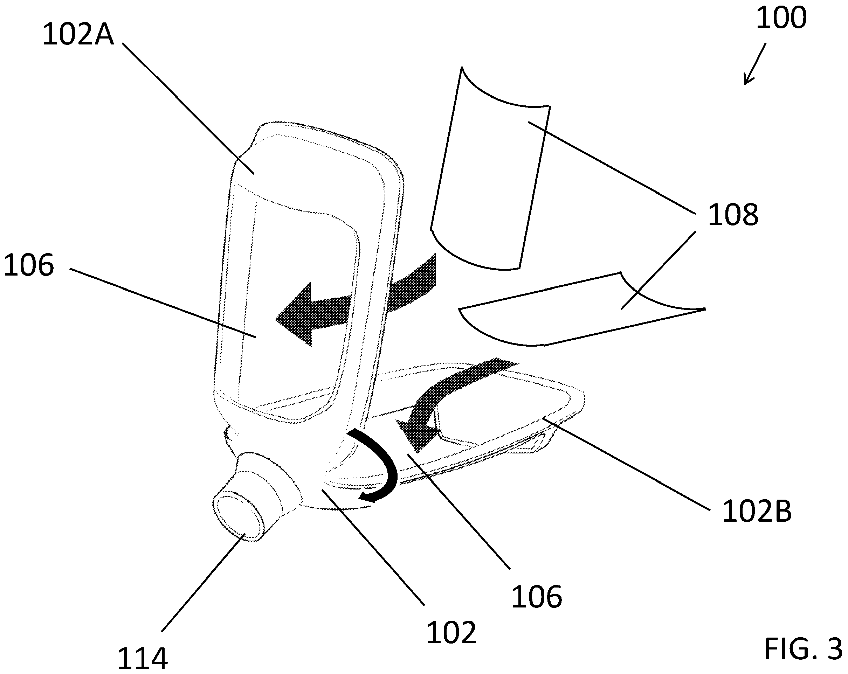

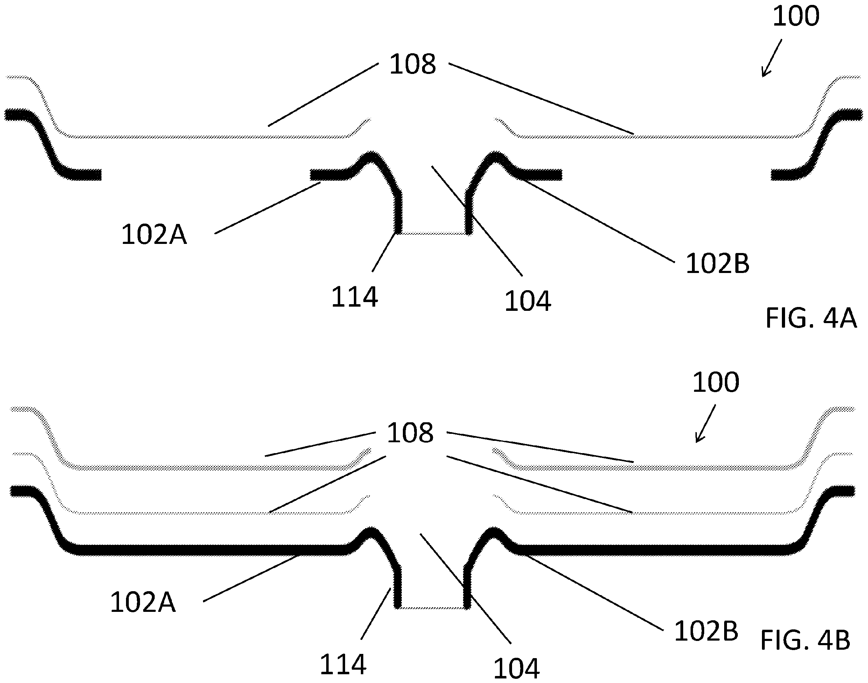

With reference to Figures 3, 4A and 4B, preferably, the frame body 102 comprises a first frame portion 102A and a second frame portion 102B. In this example embodiment, the first frame portion 102A is arranged to couple with a second frame portion 102B such that the frame body 102 and the dust blocking component 108 defines a substantially enclosed dust collection cavity 112 therein.

To produce the dust collection apparatus 100 in accordance with the embodiment, the dust blocking component 108 may be attached to the frame body 102 at the position of the exhaust window or the exhaust outlet 106. The dust blocking component 108 may be securely fixed to the frame body 102 by gluing, welding, and/or sewing, or the two may be bonded together by means of heating selectively at the bonding sites such as the edges of the dust blocking components 108 as well as the exhaust window 106 to form bonding structures between the two.

The dust blocking component 108 may comprise a single layer as shown in Figure 4A. For example, the dust blocking component 108 may be a single layer of fabric filter. Alternatively, the dust blocking component 108 may comprise multiple layers as shown in Figure 4B, such as a combination of a pattern mesh filter and a fine mesh filter or a fabric filter. Yet alternatively, multiple layers may be laminated or bond to form a unitary layer of dust blocking component 108 prior to attaching to the frame body 102.

The frame body 102 may be produced by molding of moldable materials, such as a sheet or a layer of foam material. In addition, the frame body 102 may comprise a plurality of layers of material. The multiple layers of material may be laminated or bond to form a unitary layer of material for the molding of the frame body 102. Alternatively, the multiple layers of materials may be bond to form a unitary layer of material during the molding of the multiple layers. Alternatively, the frame body 102 may be formed by injection molding, thermal molding, or any other molding method as known by a person skilled in the art.

Preferably, the frame body 102 comprises an integrally formed first frame portion 102A and second frame portion 102B. As shown in Figures 3, 4A and 4B, the first frame portion 102A and the second frame portion 102B are at least partially connected at the position of the air inlet 104 between the two portions. Since the frame body 102 is at least partially flexible and/or elastic, the frame body 102 may be banded or folded. When the frame body 102 is folded such that the first and the second frame portion 102B couples together, a subsequently enclosed dust collection cavity 112 is formed therein, with the air inlet 104 positioned at an end of the dust collection apparatus 100. Subsequently, the open edges of the first frame portion 102A and the second frame portion 1 02B may be coupled and sealed by at least one of gluing, welding, heating and sewing, or by any other suitable method as known by a person skilled in the art.

Optionally, the dust collection apparatus 100 further comprises an air inlet port 114 connected to the air inlet 104 of the frame body 102. The air inlet port 114 may be made with the same material of the frame body 102 such as a foam material or an elastomer material, and may be integrally formed with the frame body 102. Alternatively, the air inlet port 114 comprises a different material or a hard material such as metal, plastic, or any suitable material with certain stiffness. The air inlet port 114 may be fixed to the air inlet port 114 by means of any suitable fixing means, such as but not limited to gluing, welding, heating, sewing or snap fit coupling with the frame body 102.

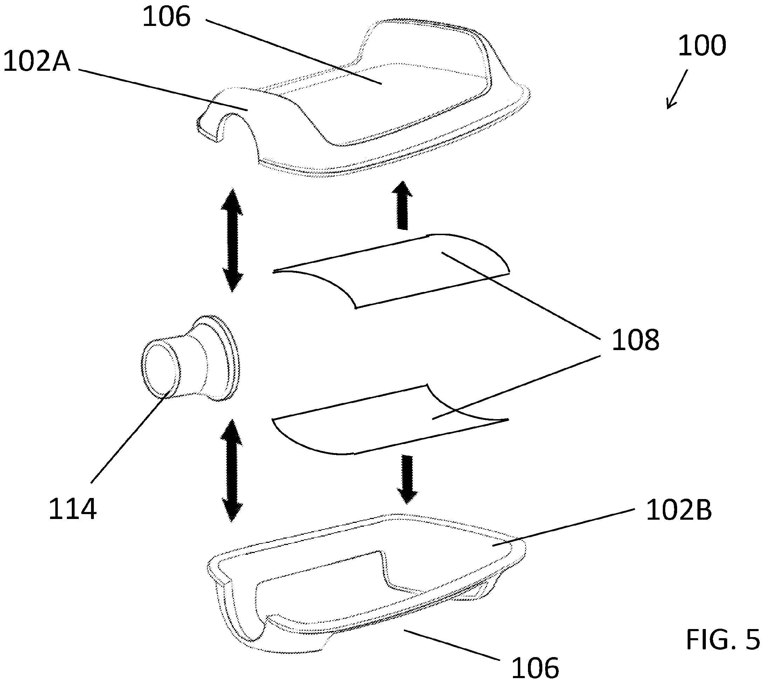

With reference Figure 5, there is shown an alternative embodiment of producing a dust collection apparatus 100 similar to the one in accordance with the previous embodiments. In this embodiment, the first frame portion 102A, the second frame portion 102B and the air inlet port 114 are separately formed or molded. Subsequently, these components, including the dust blocking component 108s may be attached together by suitable means such as gluing, welding, heating, sewing or snap fit coupling as disclosed earlier.

The above embodiments may be advantageous in that the dust collection apparatus is rigid with the framework provided by the frame body, but is light in weight due to the foam material. The area of the filter or the dust blocking component is large to minimize blockage of exhaust airflow.

Advantageously, the manufacturing of the dust collection apparatus is simple as it only involves molding of foam material and the sewing/gluing of components together to form the final structure. In addition, multiple color/pattern/layers can be included in the dust collection apparatus.

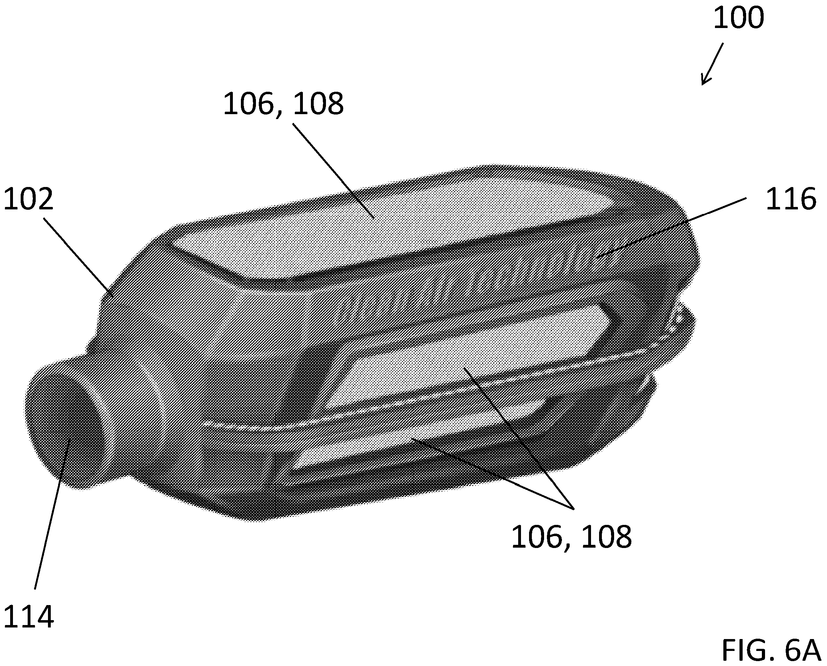

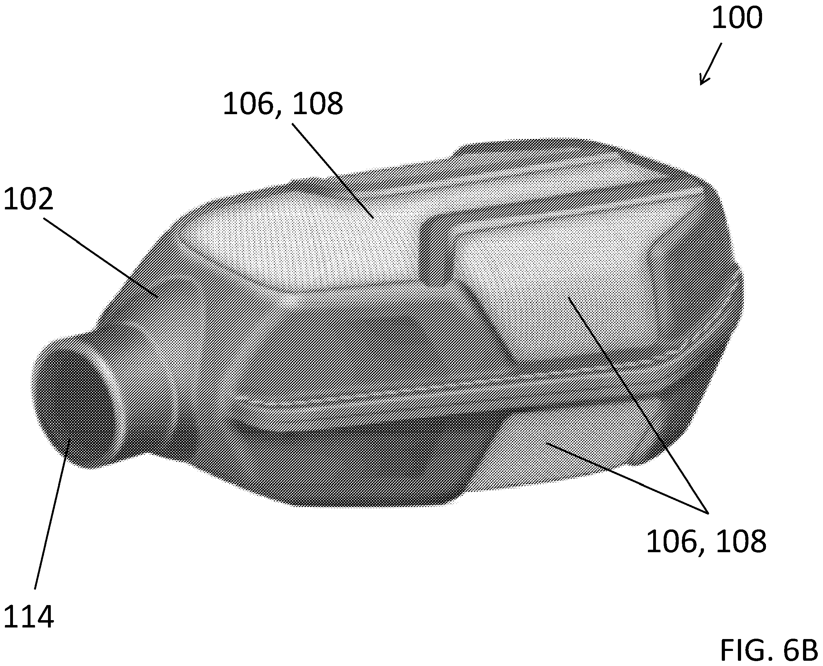

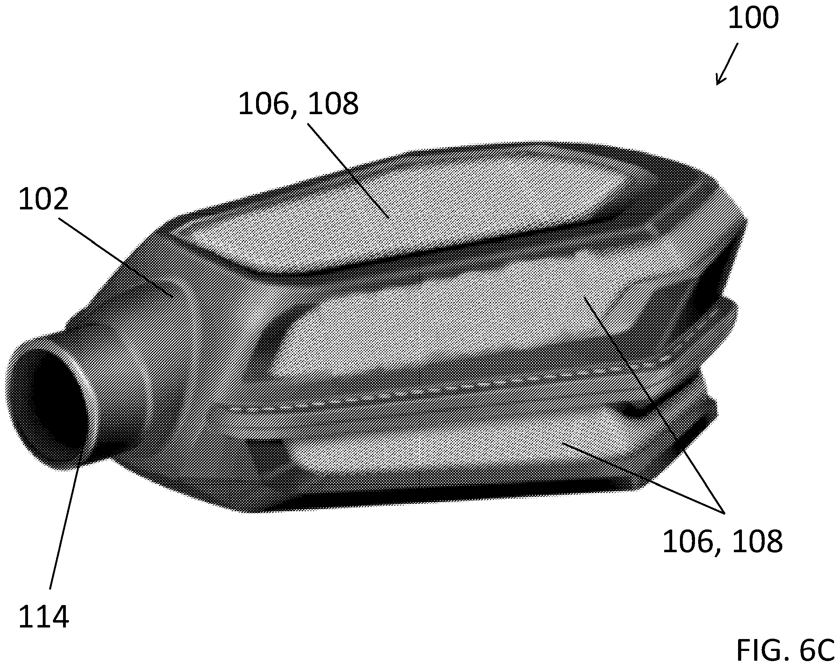

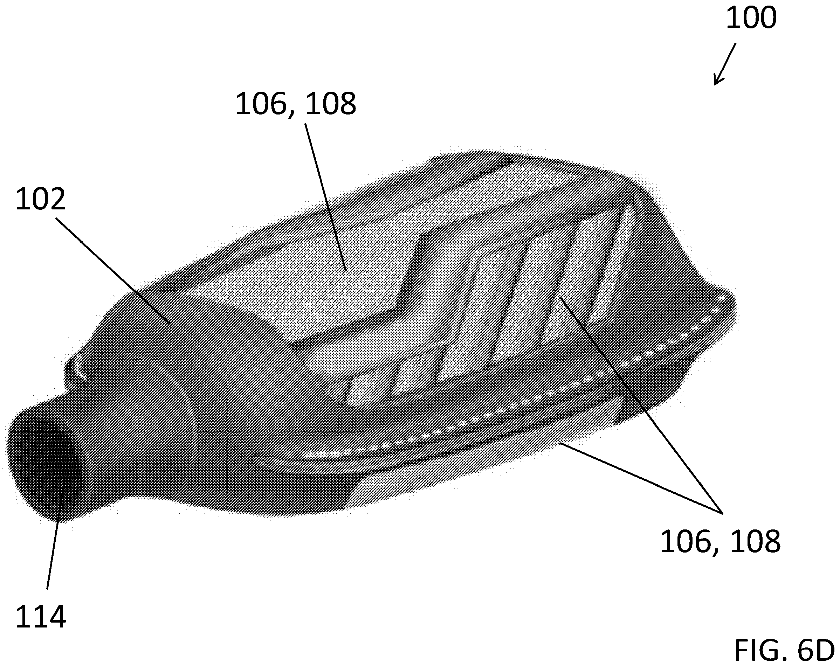

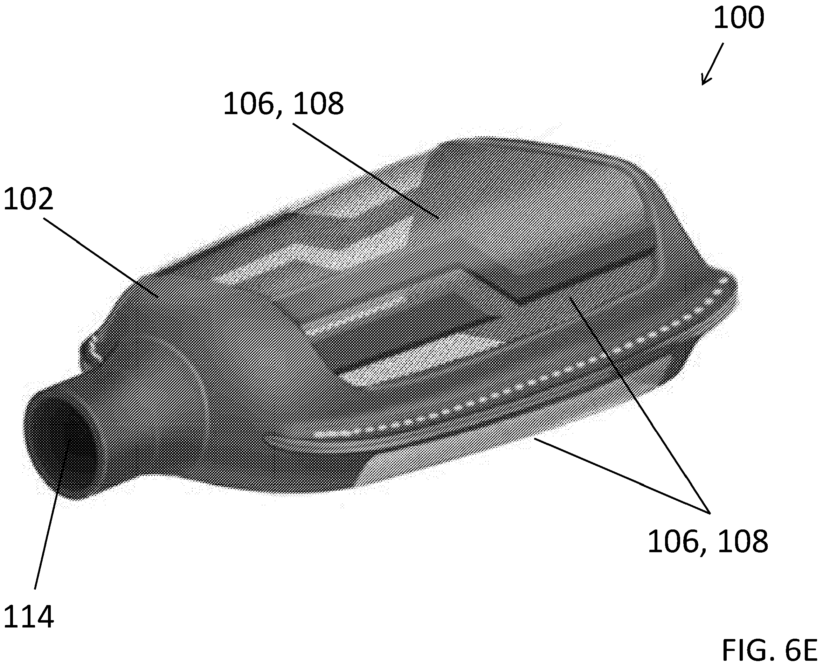

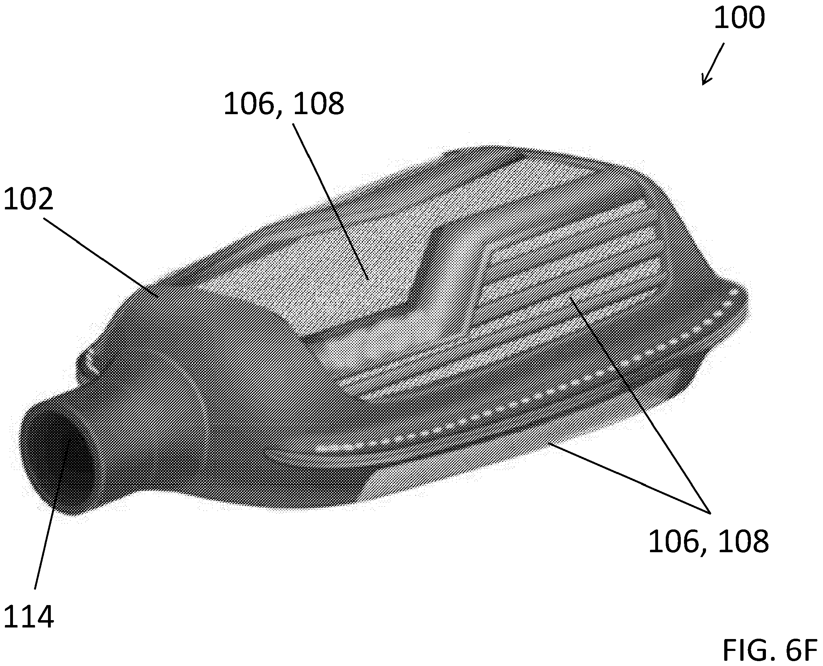

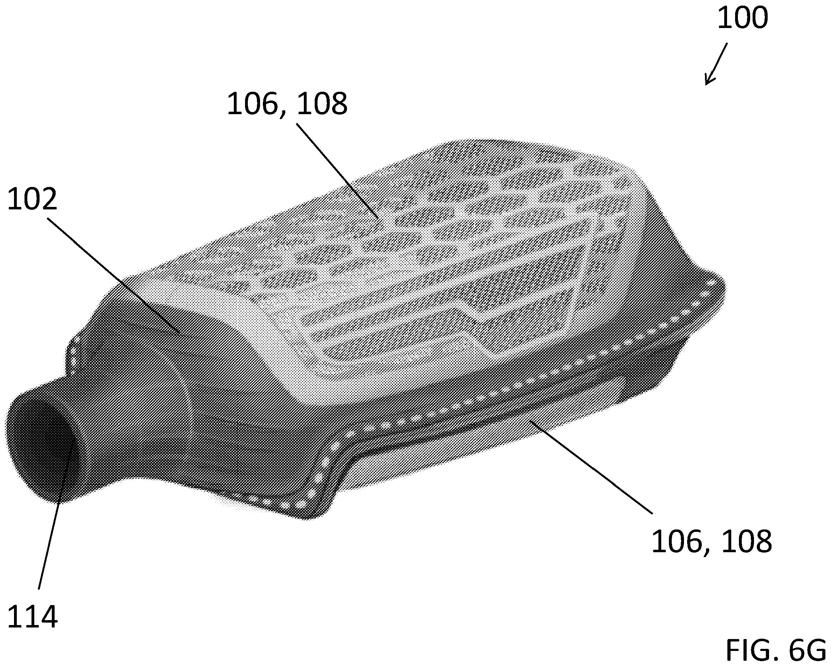

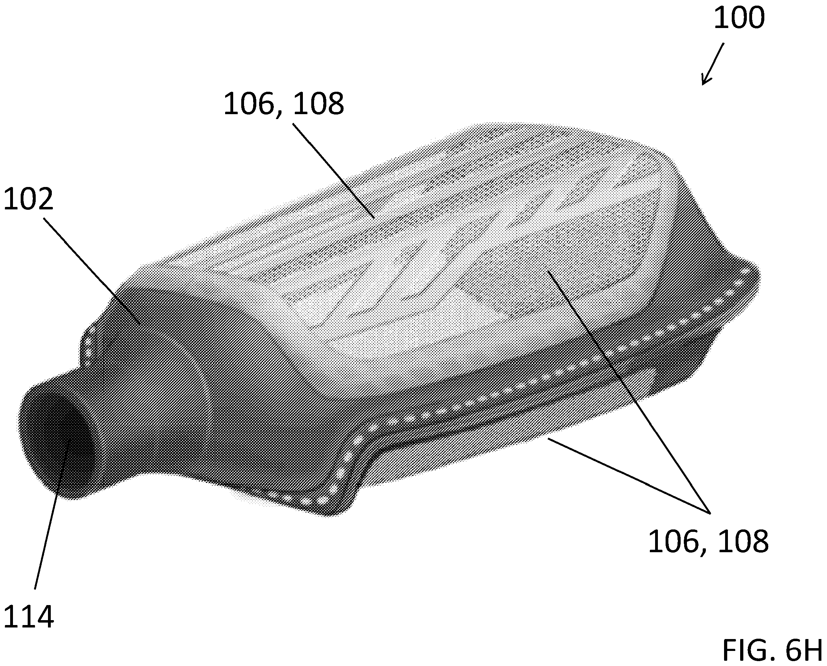

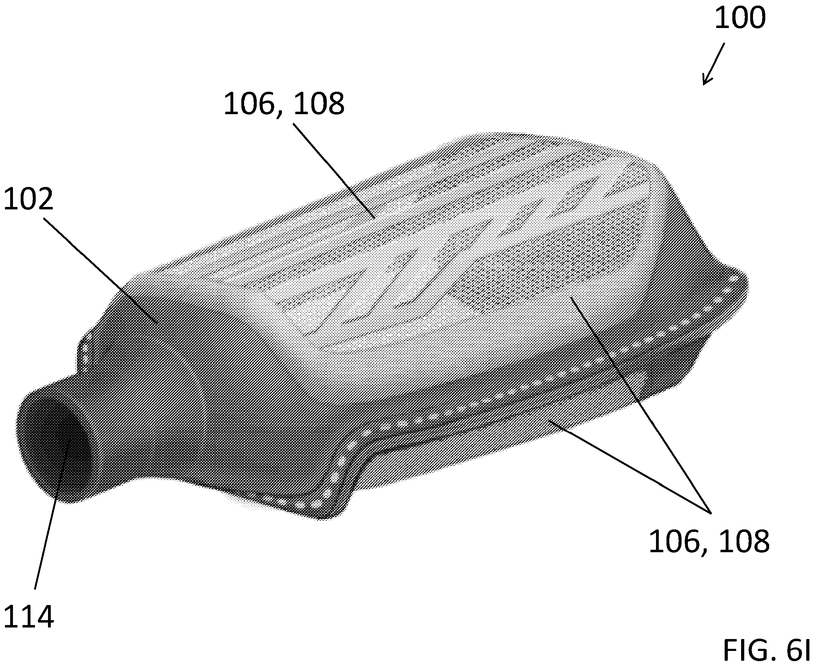

With reference to Figures 6A to 6I, there is shown a numbers of different embodiments of a dust collection apparatus 100. In these examples, the dust collection apparatuses 100 include different form factors and appearance. For example, texts and pattern 116 may be formed on the surface of the frame body 102 by the molding of the frame structure as shown in Figure 6A. Alternatively, texts and/or patterns may form on different parts of the dust collection apparatus 100, such as stamping or printing patterns on the fabric filter or meshes, or patterns may be stitched on the fabric filter or meshes.

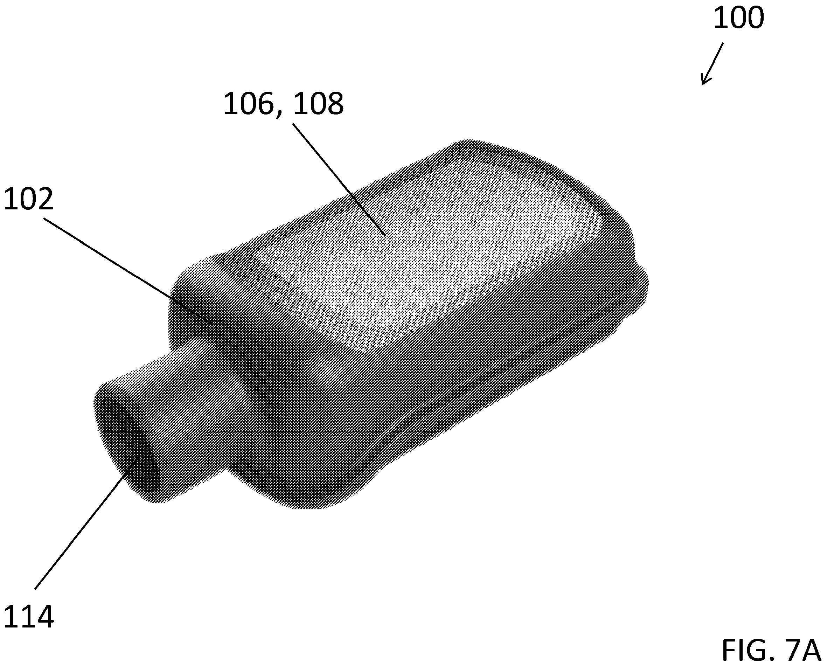

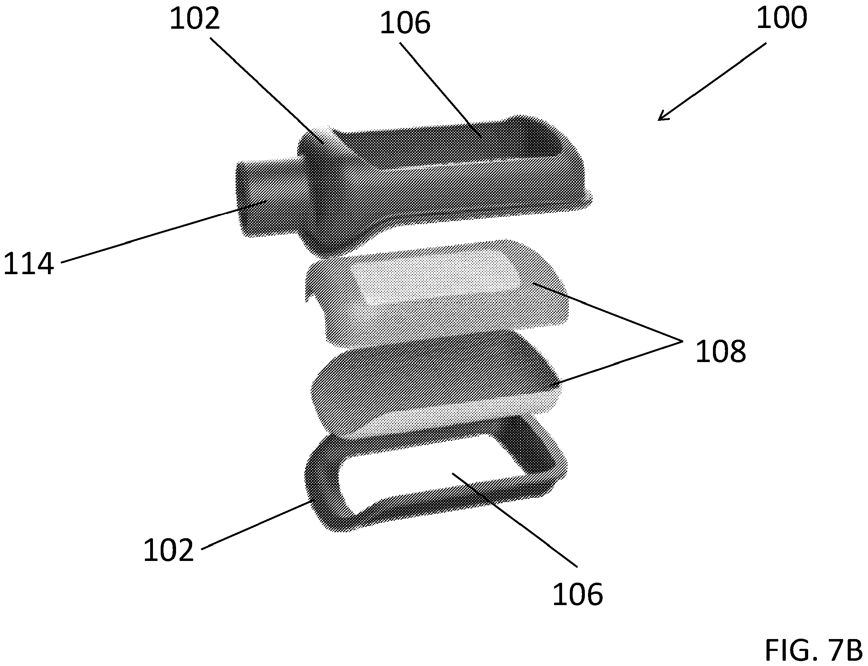

With reference to Figure 7A and 7B, there is shown an example embodiment of a dust collection apparatus 100. In this example, the dust collection apparatus 100 has a large open mesh area at a top portion and a bottom portion of the frame body 102, which defines the exhaust outlets 106. As shown in Figure 7B, the air inlet port 114 is integrated with the top portion of the frame body 102.

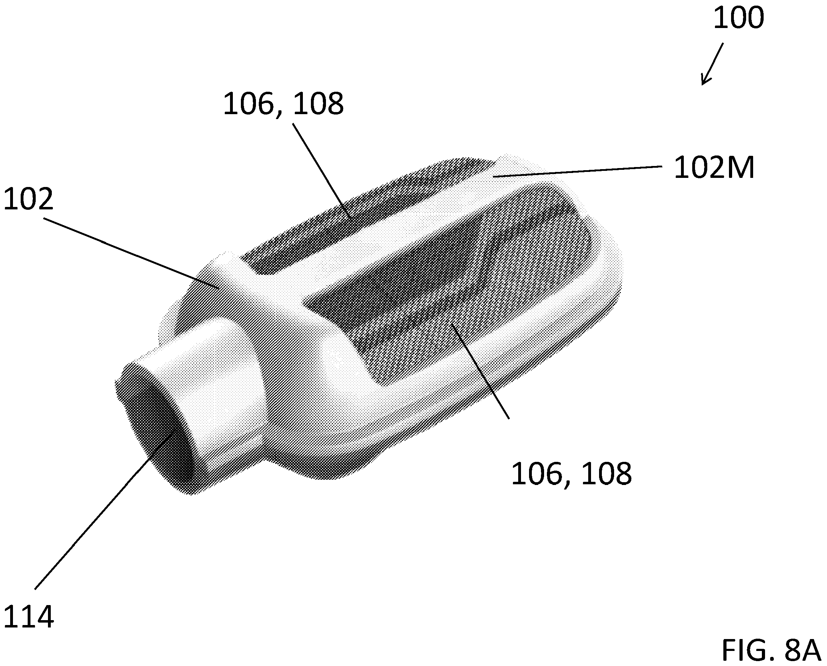

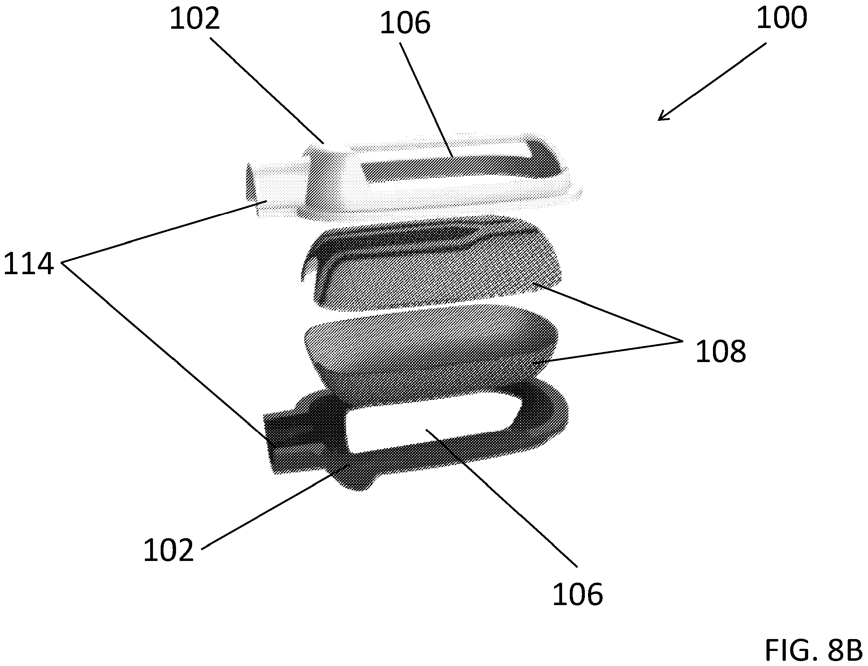

With reference to Figure 8A and 8B, there is shown an example embodiment of a dust collection apparatus 100. In this example, the dust collection apparatus 100 has a large open mesh area at a top portion and a bottom portion of the frame body 102, which defines the exhaust outlets 106. In addition, the top and/or the bottom portions of the frame body 102 are defined with a middle bridge 102M across the open mesh area, which may provide additional mechanical support to the dust blocking component 108 or the filter. As shown in Figure 8B, the air inlet port 114 is split into two halves which combine to define the air inlet port 114 when being assembled.

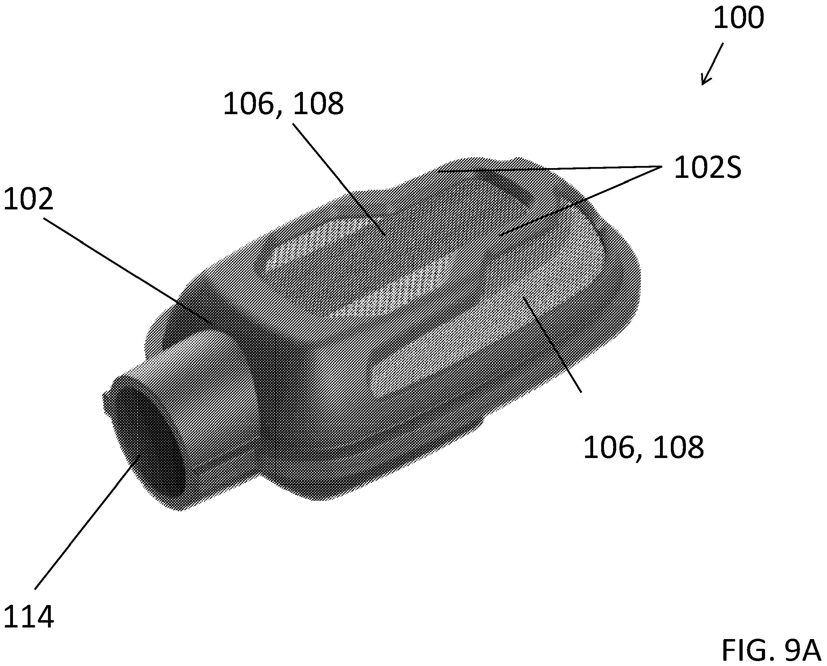

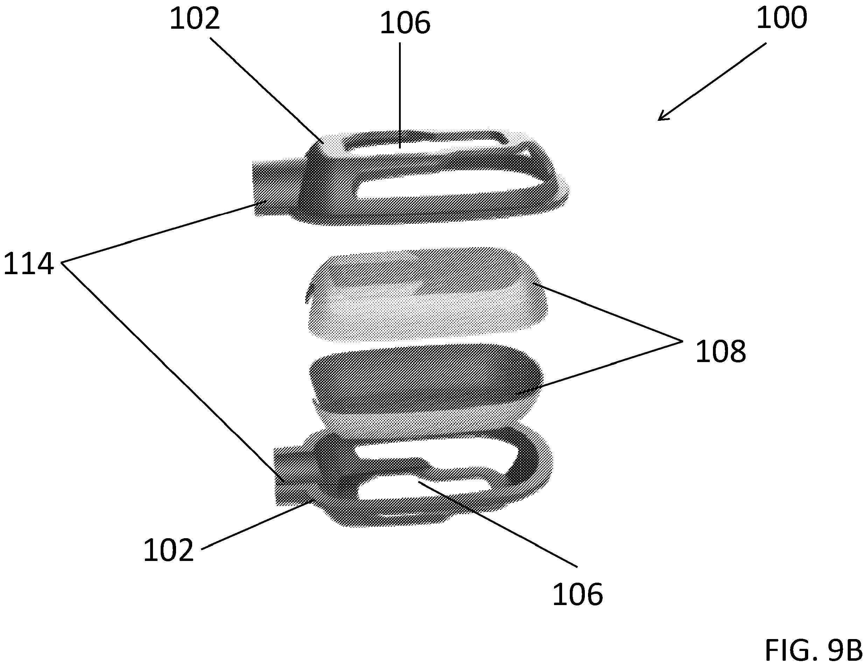

With reference to Figure 9A and 9B, there is shown an example embodiment of a dust collection apparatus 100. In this example, the dust collection apparatus 100 has a large open mesh area at a top portion and a bottom portion of the frame body 102, which defines the exhaust outlets 106. In addition, the top and/or the bottom portions of the frame body 102 are defined with at least one side bridges 102S across the open mesh area, which may provide additional mechanical support to the dust blocking component 108 or the filter. As shown in Figure 9B, the air inlet port 114 is split into two halves which combine to define the air inlet port 114 when being assembled.

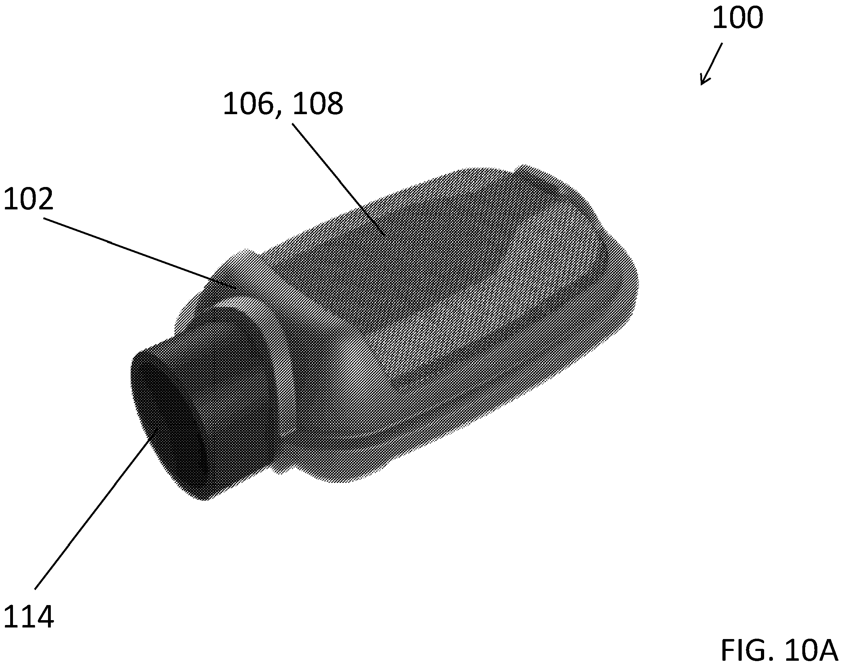

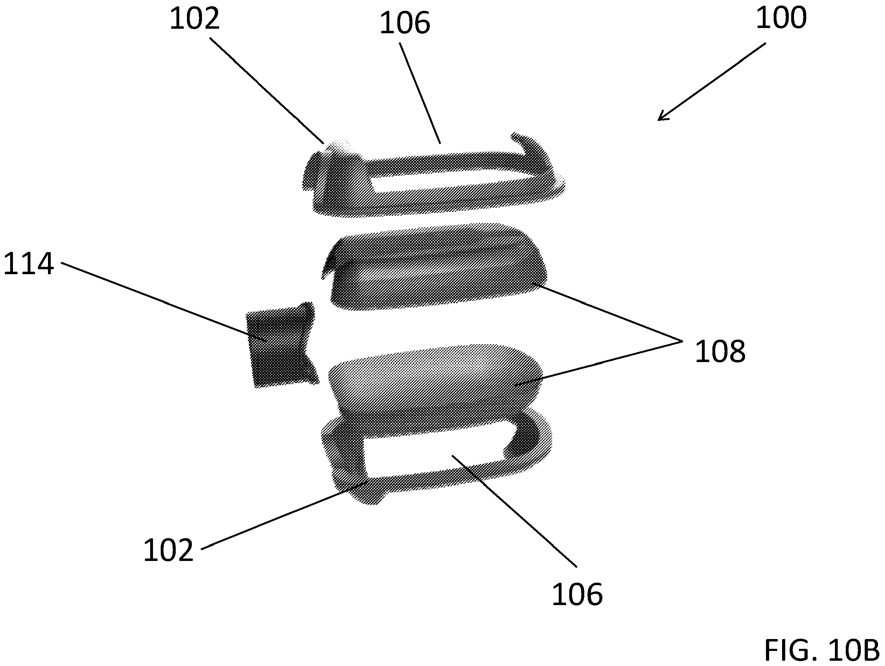

With reference to Figure 10A and 10B, there is shown an example embodiment of a dust collection apparatus 100. In this example, the dust collection apparatus 100 has a large open mesh area at a top portion and a bottom portion of the frame body 102, which defines the exhaust outlets 106. As shown in Figure 10B, the air inlet port 114 is a separate component arranged to combine with the frame body 102 when being assembled. Preferably, the air inlet port 114 may be made in plastic, and the connection between the air inlet port 114 and the frame body 102 is substantially air-tight.

It will be appreciated by persons skilled in the art that numerous variations and/or modifications may be made to the specific embodiments without departing from the scope of the invention as defined in the claims. The present embodiments are, therefore, to be considered in all respects as illustrative and not restrictive.

Any reference to prior art contained herein is not to be taken as an admission that the information is common general knowledge, unless otherwise indicated.

## Claims

1. A dust collection apparatus (100) comprising:
a frame body (102) defining an air inlet (104) and an exhaust outlet (106); and
a dust blocking component (108) attached to the frame body at the exhaust outlet;
wherein the dust blocking component is arranged to allow an airflow passing through, and the combination of the frame body and the dust blocking component defines a dust collection cavity (112) therein; and
wherein the frame body comprises an at least partially flexible and/or elastic material, and wherein the frame body comprises a first frame portion (102A) arranged to couple with a second frame portion (102B), **characterized in that** the first frame portion and the second frame portion being coupled by at least one of gluing, welding, heating and sewing.

2. A dust collection apparatus (100) in accordance with claim 1, wherein the first frame portion (102A) is integrally formed with the second frame portion (102B) such that the first frame portion is at least partially connected with the second frame portion.

3. A dust collection apparatus (100) in accordance with any one of claims 1 or 2, further comprising an air inlet port (114) connected to the air inlet (104) of the frame body (102), and optionally wherein the air inlet port is integrally formed with the frame body.

4. A dust collection apparatus (100) in accordance with any one of claims 1 to 3, wherein the frame body (102) comprises a foam material and/or an elastomer material, and/or wherein the frame body comprises a plurality of layers of material and optionally wherein the plurality of layers of material are laminated to form a unitary layer of material.

5. A dust collection apparatus (100) in accordance with any one of claims 1 to 4, wherein the dust blocking component (108) comprises a mesh structure arrange to block dust from passing through, and/or wherein the dust blocking component comprises a fabric filter and/or a HEPA filter.

6. A dust collection apparatus (100) in accordance with any one of claims 1 to 5, wherein the dust collection apparatus is arranged to collect dust by separating dust when the airflow (110) containing the dust passes through the dust collection cavity (112) and the dust blocking component (108) such that the dust blocked by the dust blocking component is collected in the dust collection cavity.

7. A dust collection apparatus (100) in accordance with any one of claims 1 to 6, wherein the dust collection apparatus is a dust box for use in a power tool.

8. A method of producing a dust collection apparatus (100), comprising the steps of:
- providing a frame body (102) having an air inlet (104) and an exhaust outlet (106); and
- attaching a dust blocking component (108) to the frame body at the exhaust outlet;
wherein the dust blocking component is arranged to allow an airflow (110) passing through;
wherein the combination of the frame body and the dust blocking component defines a dust collection cavity (112) therein; and
wherein the frame body comprises an at least partially flexible and/or elastic material,
wherein the step of providing the frame body comprises the step of molding the at least partially flexible and/or elastic material to form the frame body, **characterized in** the step of coupling a first frame portion (102A) with a second frame portion (102B) by at least one of gluing, welding, heating and sewing.

9. A method of producing a dust collection apparatus (100) in accordance with claim 8, wherein the frame body (102) is formed by injection molding, or wherein the frame body is formed by heat forming from a sheet of the at least partially flexible and/or elastic material.

10. A method of producing a dust collection apparatus (100) in accordance with any one of claims 8 or 9, wherein the first frame portion (102A) is integrally formed with the second frame portion (102B) such that the first frame portion is at least partially connected with the second frame portion.

11. A method of producing a dust collection apparatus (100) in accordance with any one of claims 8 to 10, further comprising the step of connecting an air inlet port (114) to the air inlet (104) of the frame body (102), or wherein an air inlet port is integrally formed with the frame body.

12. A method of producing a dust collection apparatus (100) in accordance with any one of claims 8 to 11, wherein the frame body (102) comprises a foam material and/or an elastomer material.

13. A method of producing a dust collection apparatus (100) in accordance with any one of claims 8 to 12, wherein the frame body (102) comprises a plurality of layers of material, and optionally further comprising the step of laminating the plurality of layers of material to form a unitary layer of material.

14. A method of producing a dust collection apparatus (100) in accordance with any one of claims 8 to 13, wherein the dust blocking component (108) comprises a mesh structure arranged to block dust from passing through, and/or wherein the dust blocking component comprises a fabric filter and/or a HEPA filter.

15. A method of producing a dust collection apparatus (100) in accordance with any one of claims 8 to 14, wherein the frame body (102) and the dust blocking component (108) are attached by at least one of gluing, welding, heating and sewing.

## Patentansprüche

1. Staubsammelvorrichtung (100), umfassend:
einen Rahmenkörper (102), der einen Lufteinlass (104) und einen Abluftauslass (106) definiert; und
eine Staub zurückhaltende Komponente (108), die an dem Rahmenkörper am Abluftauslass befestigt ist;
wobei die Staub zurückhaltende Komponente derart eingerichtet ist, dass sie einen Luftstrom hindurchlässt, und die Kombination aus dem Rahmenkörper und der Staub zurückhaltenden Komponente einen Staubsammelhohlraum (112) darin definiert; und
wobei der Rahmenkörper ein zumindest teilweise flexibles und/oder elastisches Material umfasst und wobei der Rahmenkörper einen ersten Rahmenabschnitt (102A) umfasst, der derart eingerichtet ist, dass er mit einem zweiten Rahmenabschnitt (102B) koppelt, **dadurch gekennzeichnet, dass** der erste Rahmenabschnitt und der zweite Rahmenabschnitt durch Kleben, Schweißen, Erwärmen und/oder Nähen gekoppelt sind.

2. Staubsammelvorrichtung (100) nach Anspruch 1, wobei der erste Rahmenabschnitt (102A) integriert mit dem zweiten Rahmenabschnitt (102B) ausgebildet ist, sodass der erste Rahmenabschnitt zumindest teilweise mit dem zweiten Rahmenabschnitt verbunden ist.

3. Staubsammelvorrichtung (100) nach einem der Ansprüche 1 oder 2, ferner einen Lufteinlassanschluss (114) umfassend, der mit dem Lufteinlass (104) des Rahmenkörpers (102) verbunden ist, und wobei optional der Lufteinlassanschluss integriert mit dem Rahmenkörper ausgebildet ist.

4. Staubsammelvorrichtung (100) nach einem der Ansprüche 1 bis 3, wobei der Rahmenkörper (102) ein Schaumstoffmaterial und/oder ein Elastomermaterial umfasst und/oder wobei der Rahmenkörper eine Vielzahl von Materialschichten umfasst und wobei optional die Vielzahl von Materialschichten zum Bilden einer vereinten Materialschicht laminiert ist.

5. Staubsammelvorrichtung (100) nach einem der Ansprüche 1 bis 4, wobei die Staub zurückhaltende Komponente (108) eine Maschenstruktur umfasst, die derart eingerichtet ist, dass sie ein Hindurchtreten von Staub verhindert, und/oder wobei die Staub zurückhaltende Komponente ein Gewebefilter und/oder ein HEPA-Filter umfasst.

6. Staubsammelvorrichtung (100) nach einem der Ansprüche 1 bis 5, wobei die Staubsammelvorrichtung derart eingerichtet ist, dass sie Staub sammelt, nämlich durch Abscheiden von Staub, wenn der Luftstrom (110), der den Staub enthält, durch den Staubsammelhohlraum (112) und die Staub zurückhaltende Komponente(108) strömt, sodass der Staub, der durch die Staub zurückhaltende Komponente zurückgehalten wird, sich im Staubsammelhohlraum ansammelt.

7. Staubsammelvorrichtung (100) nach einem der Ansprüche 1 bis 6, wobei die Staubsammelvorrichtung eine Staubbox zur Verwendung in einem Elektrowerkzeug ist.

8. Verfahren zum Herstellen einer Staubsammelvorrichtung (100), umfassend die Schritte:
- Bereitstellen eines Rahmenkörpers (102) mit einem Lufteinlass (104) und einem Abluftauslass (106); und
- Befestigen einer Staub zurückhaltenden Komponente (108) an dem Rahmenkörper am Abluftauslass;
wobei die Staub zurückhaltende Komponente derart eingerichtet ist, dass sie einen Luftstrom (110) durchlässt;
wobei die Kombination aus dem Rahmenkörper und der Staub zurückhaltenden Komponente einen Staubsammelhohlraum (112) darin definiert; und
wobei der Rahmenkörper ein zumindest teilweise flexibles und/oder elastisches Material umfasst,
wobei der Schritt des Bereitstellens des Rahmenkörpers den Schritt des Formens des zumindest teilweise flexiblen und/oder elastischen Materials, um den Rahmenkörper zu bilden, umfasst, **gekennzeichnet durch** den Schritt des Koppelns eines ersten Rahmenabschnitts (102A) mit einem zweiten Rahmenabschnitt (102B) durch Kleben, Schweißen, Erwärmen und/oder Nähen.

9. Verfahren zum Herstellen einer Staubsammelvorrichtung (100) nach Anspruch 8, wobei der Rahmenkörper (102) durch Spritzgießen gebildet wird oder wobei der Rahmenkörper durch Warmformen aus einer Lage des zumindest teilweise flexiblen und/oder elastischen Materials gebildet wird.

10. Verfahren zum Herstellen einer Staubsammelvorrichtung (100) nach einem der Ansprüche 8 oder 9, wobei der erste Rahmenabschnitt (102A) integriert mit dem zweiten Rahmenabschnitt (102B) gebildet wird, sodass der erste Rahmenabschnitt zumindest teilweise mit dem zweiten Rahmenabschnitt verbunden ist.

11. Verfahren zum Herstellen einer Staubsammelvorrichtung (100) nach einem der Ansprüche 8 bis 10, ferner den Schritt des Verbindens eines Lufteinlassanschlusses (114) mit dem Lufteinlass (104) des Rahmenkörpers (102) umfassend, oder wobei ein Lufteinlassanschluss integriert mit dem Rahmenkörper gebildet wird.

12. Verfahren zum Herstellen einer Staubsammelvorrichtung (100) nach einem der Ansprüche 8 bis 11, wobei der Rahmenkörper (102) ein Schaumstoffmaterial und/oder ein Elastomermaterial umfasst.

13. Verfahren zum Herstellen einer Staubsammelvorrichtung (100) nach einem der Ansprüche 8 bis 12, wobei der Rahmenkörper (102) eine Vielzahl von Materialschichten umfasst, und ferner optional den Schritt des Laminierens der Vielzahl von Materialschichten umfassend, um eine vereinte Materialschicht zu bilden.

14. Verfahren zum Herstellen einer Staubsammelvorrichtung (100) nach einem der Ansprüche 8 bis 13, wobei die Staub zurückhaltende Komponente (108) eine Maschenstruktur umfasst, die derart eingerichtet ist, dass sie ein Hindurchtreten von Staub verhindert, und/oder wobei die Staub zurückhaltende Komponente ein Gewebefilter und/oder ein HEPA-Filter umfasst.

15. Verfahren zum Herstellen einer Staubsammelvorrichtung (100) nach einem der Ansprüche 8 bis 14, wobei der Rahmenkörper (102) und die Staub zurückhaltende Komponente (108) durch Kleben, Schweißen, Erwärmen und/oder Nähen befestigt werden.

## Revendications

1. Appareil de collecte de poussière (100) comprenant :
un corps de cadre (102) définissant une entrée d'air (104) et une sortie d'échappement (106) ; et
un composant de blocage de poussière (108) fixé au corps de cadre au niveau de la sortie d'échappement ;
dans lequel le composant de blocage de poussière est agencé pour permettre à un flux d'air de passer à travers, et la combinaison du corps de cadre et du composant de blocage de poussière définit une cavité de collecte de poussière (112) à l'intérieur de ceux-ci ; et
dans lequel le corps de cadre comprend un matériau au moins partiellement flexible et/ou élastique, et dans lequel le corps de cadre comprend une première partie de cadre (102A) agencée pour se coupler à une seconde partie de cadre (102B), **caractérisé en ce que** la première partie de cadre et la seconde partie de cadre sont couplées par au moins l'un d'un collage, d'un soudage, d'un chauffage et d'une couture.

2. Appareil de collecte de poussière (100) selon la revendication 1, dans lequel la première partie de cadre (102A) est formée intégralement avec la seconde partie de cadre (102B) de telle sorte que la première partie de cadre est au moins partiellement reliée à la seconde partie de cadre.

3. Appareil de collecte de poussière (100) selon l'une quelconque des revendications 1 ou 2, comprenant en outre un orifice d'entrée d'air (114) relié à l'entrée d'air (104) du corps de cadre (102), et éventuellement dans lequel l'orifice d'entrée d'air est formé intégralement avec le corps de cadre.

4. Appareil de collecte de poussière (100) selon l'une quelconque des revendications 1 à 3, dans lequel le corps de cadre (102) comprend un matériau en mousse et/ou un matériau élastomère, et/ou dans lequel le corps de cadre comprend une pluralité de couches de matériau et éventuellement dans lequel la pluralité de couches de matériau sont stratifiées pour former une couche unitaire de matériau.

5. Appareil de collecte de poussière (100) selon l'une quelconque des revendications 1 à 4, dans lequel le composant de blocage de poussière (108) comprend une structure maillée agencée pour empêcher la poussière de passer à travers, et/ou dans lequel le composant de blocage de poussière comprend un filtre en tissu et/ou un filtre HEPA.

6. Appareil de collecte de poussière (100) selon l'une quelconque des revendications 1 à 5, dans lequel l'appareil de collecte de poussière est agencé pour collecter de la poussière en séparant la poussière lorsque le flux d'air (110) contenant la poussière passe à travers la cavité de collecte de poussière (112) et le composant de blocage de poussière (108) de telle sorte que la poussière bloquée par le composant de blocage de poussière est collectée dans la cavité de collecte de poussière.

7. Appareil de collecte de poussière (100) selon l'une quelconque des revendications 1 à 6, dans lequel l'appareil de collecte de poussière est une boîte à poussière pour son utilisation dans un outil électrique.

8. Procédé de production d'un appareil de collecte de poussière (100), comprenant les étapes consistant à :
- fournir un corps de cadre (102) ayant une entrée d'air (104) et une sortie d'échappement (106) ; et
- fixer un composant de blocage de poussière (108) au corps de cadre au niveau de la sortie d'échappement ;
dans lequel le composant de blocage de poussière est agencé pour permettre à un flux d'air (110) de passer à travers ;
dans lequel la combinaison du corps de cadre et du composant de blocage de poussière définit une cavité de collecte de poussière (112) à l'intérieur de ceux-ci ; et
dans lequel le corps de cadre comprend un matériau au moins partiellement flexible et/ou élastique,
dans lequel l'étape de fourniture du corps de cadre comprend l'étape de moulage du matériau au moins partiellement flexible et/ou élastique pour former le corps de cadre, **caractérisé par** l'étape de couplage d'une première partie de cadre (102A) à une seconde partie de cadre (102B) par au moins l'un d'un collage, d'un soudage, d'un chauffage et d'une couture.

9. Procédé de production d'un appareil de collecte de poussière (100) selon la revendication 8, dans lequel le corps de cadre (102) est formé par moulage par injection, ou dans lequel le corps de cadre est formé par thermoformage à partir d'une feuille du matériau au moins partiellement flexible et/ou élastique.

10. Procédé de production d'un appareil de collecte de poussière (100) selon l'une quelconque des revendications 8 ou 9, dans lequel la première partie de cadre (102A) est formée intégralement avec la seconde partie de cadre (102B) de telle sorte que la première partie de cadre est au moins partiellement reliée à la seconde partie de cadre.

11. Procédé de production d'un appareil de collecte de poussière (100) selon l'une quelconque des revendications 8 à 10, comprenant, en outre, l'étape consistant à relier un orifice d'entrée d'air (114) à l'entrée d'air (104) du corps de cadre (102), ou dans lequel un orifice d'entrée d'air est formé intégralement avec le corps de cadre.

12. Procédé de production d'un appareil de collecte de poussière (100) selon l'une quelconque des revendications 8 à 11, dans lequel le corps de cadre (102) comprend un matériau en mousse et/ou un matériau élastomère.

13. Procédé de production d'un appareil de collecte de poussière (100) selon l'une quelconque des revendications 8 à 12, dans lequel le corps de cadre (102) comprend une pluralité de couches de matériau, et éventuellement comprenant, en outre, l'étape consistant à stratifier la pluralité de couches de matériau pour former une couche unitaire de matériau.

14. Procédé de production d'un appareil de collecte de poussière (100) selon l'une quelconque des revendications 8 à 13, dans lequel le composant de blocage de poussière (108) comprend une structure maillée agencée pour empêcher la poussière de passer à travers, et/ou dans lequel le composant de blocage de poussière comprend un filtre en tissu et/ou un filtre HEPA.

15. Procédé de production d'un appareil de collecte de poussière (100) selon l'une quelconque des revendications 8 à 14, dans lequel le corps de cadre (102) et le composant de blocage de poussière (108) sont fixés par au moins l'un d'un collage, d'un soudage, d'un chauffage et d'une couture.
